# EUROPÄISCHE PATENTSCHRIFT

(11) **EP 1 247 702 B1**
(45) Veröffentlichungstag und Bekanntmachung des Hinweises auf die Patenterteilung: **02.06.2004**
(21) Anmeldenummer: 02007217.9
(22) Anmeldetag: 27.03.2002
(51) Int. Cl.: B60R 21/20

(54) **Gassackmodul und Lenkrad**
Airbag module and steering wheel
Module de sac gonflable et volant de direction

(30) Priorität: 02.04.2001 DE 20105733 U
(43) Veröffentlichungstag der Anmeldung: 09.10.2002
(73) Patentinhaber: TRW Automotive Safety Systems GmbH, 63743 Aschaffenburg (DE)
(72) Erfinder: Hauer, Constantin, 63825 Schöllkrippen (DE)
(74) Vertreter: Kitzhofer, Thomas, Dipl.-Ing.

(56) Entgegenhaltungen:
- DE-A- 19 908 915
- DE-U- 20 016 386

## Beschreibung

Die Erfindung betrifft ein Gassackmodul mit einem Gasgenerator und einem elastischen Lagerelement, mittels dem der Gasgenerator schwingungsentkoppelt im Modul gelagert ist. Die Erfindung betrifft weiterhin ein Lenkrad mit einem Gassackmodul, das einen Gasgenerator enthält, wobei das Gassackmodul mittels eines elastischen Lagerelements schwingungsentkoppelt am Lenkrad gelagert ist.

Im Lenkrad angeordnete Gassackmodule erhöhen die Sicherheit des Fahrers erheblich. Aufgrund der relativ hohen Masse des Gassackmoduls treten jedoch verstärkt Vibrationen und Schwingungen im Lenkrad auf, die sich störend auswirken und die Fahrsicherheit beeinträchtigen. Um derartige Schwingungen zu reduzieren, ist es bekannt, das Gassackmodul oder den Gasgenerator, der einen Großteil der Masse des Gassackmoduls ausmacht, gegenüber dem Lenkrad schwingungsentkoppelt zu lagern. Der so gelagerte Gasgenerator bzw. das so gelagerte Gassackmodul kann dann eine von den Lenkradschwingungen unabhängige Schwingungsbewegung ausführen. Die Lagerung erfolgt über ein oder mehrere elastische Lagerelemente. Durch die Abstimmung der Federkonstante des elastischen Lagerelementes läßt sich die Resonanzfrequenz der Schwingung des Gasgenerators bzw. des Gassackmoduls so einstellen, daß eine Dämpfung der Lenkradschwingungen möglich ist, so daß ein sogenannter Schwingungstilger geschaffen wird. Wegen der für diesen Einsatz günstigen Federkonstanten werden bevorzugt elastische Lagerelemente aus Elastomeren bzw. Polymeren eingesetzt. Bei derart schwingungsentkoppelt gelagerten Gasgeneratoren tritt nun das Problem auf, daß diese Gasgeneratoren nicht mehr elektrisch leitend mit anderen Fahrzeugteilen verbunden und über diese Verbindung geerdet sind. Um zu verhindern, daß der Gasgenerator aufgrund von Störimpulsen oder angesammelten elektrischen Ladungen zur Unzeit zündet, ist es bekannt, ein zusätzliches Erdungskabel mit dem Gasgenerator zu verbinden. Dies ist insbesondere wegen des geringen Platzangebotes, das im Gassackmodul bzw. im Lenkrad zur Verfügung steht, nachteilig. Aus dem Dokument DE-A-19 908 915 ist ein Gassackmodul nach dem Oberbegriff des Anspruchs 1 bekannt.

Die Aufgabe der Erfindung stellt sich darin, die Erdung eines schwingungsentkoppelt gelagerten Gasgenerators zu verbessern.

Dies wird bei einem gattungsgemäßen Gassackmodul dadurch erreicht, daß das elastische Lagerelement elektrisch leitfähig ist und einen Teil einer elektrischen Erdungsleitung für den Gasgenerator bildet. Das elastische Lagerelement wird also unter Beibehaltung der für eine Schwingungsentkopplung notwendigen Schwingungseigenschaften elektrisch leitfähig gestaltet. Die Erfindung bietet den Vorteil, daß durch den Wegfall des separaten Erdungskabels der benötigte Bauraum reduziert wird. Außerdem können die Schwingungseigenschaften nicht mehr durch das separate Erdungskabel nachteilig beeinflußt werden. Zusätzlich wird die Erdung des Gasgenerators gegenüber der Verwendung eines Erdungskabels verbessert, da das elastische Lagerelement im allgemeinen mit einer größeren Fläche am Gasgenerator anliegt als es ein Erdungskabel tut.

Wegen der vorteilhaften Schwingungseigenschaften von Elastomeren enthält das elastische Lagerelement bevorzugt ein elastomeres Element. Dieses elastomere Element kann vorteilhaft aus Gummi bestehen, ein Material, das die erwünschten Schwingungseigenschaften aufweist sowie billig und leicht zu verarbeiten ist.

In einer bevorzugten Ausführungsform der Erfindung enthält das elastomere Element ein elektrisch leitfähiges Elastomer, was zum Beispiel dadurch erreicht werden kann, daß einem Elastomer Ruß- oder Metallpartikel beigemischt werden.

In einer anderen bevorzugten Ausführungsform weist das elastische Lagerelement mehrere Lagen auf, von denen eine Lage aus einem elektrisch leitfähigen Material besteht. Die elektrisch leitfähige Lage ist bevorzugt zwischen zwei Lagen aus elastischem Material angeordnet. So lassen sich Materialien miteinander kombinieren, die zum einen eine gute elektrische Leitfähigkeit aufweisen und zum anderen dem elastischen Lagerelement günstige Schwingungseigenschaften verleihen. Die Lagen aus elastischem Material können bei dieser Ausführungsform das elastomere Element darstellen.

Geeignete Materialien für die leitfähige Lage sind zum Beispiel Metallgeflecht, Metalldraht, Metallfolie oder Kohlefaser. Es ist auch denkbar, z.B. eine mit einem leitfähigen Material wie z.B. Messing beschichtete Folie zu verwenden.

Um gute Schwingungseigenschaften und eine hohe Belastbarkeit des elastischen Lagerelements zu erreichen, weist die elektrisch leitfähige Lage vorzugsweise Öffnungen auf, durch die hindurch die elastischen Lagen miteinander verbunden sind. So läßt sich ein stabiler Verbund der unterschiedlichen Materialien erzielen.

Eine Alternative dazu, den Gasgenerator schwingungsentkoppelt zu lagern, besteht darin, das gesamte Gassackmodul im Lenkrad schwingungsentkoppelt zu lagern und eventuell zur Schwingungstilgung einzusetzen. Das Problem, das sich dabei stellt, gleicht dem oben beschriebenen.

Das geschilderte Problem wird bei einem oben genannten Lenkrad dadurch behoben, daß das elastische Lagerelement elektrisch leitfähig ist und einen Teil einer Erdungsleitung des Gasgenerators bildet. Die Vorteile, die durch die Erfindung geboten werden, entsprechen den für das Gassackmodul genannten. Da das separate Erdungskabel entfällt, verringert sich der Platzbedarf für das Gassackmodul, was beim Einsatz in einem Lenkrad, das aus optischen und sicherheitstechnischen Gründen möglichst schlank gebaut sein sollte, besonders günstig ist.

Die Erfindung schafft eine einfache Erdung des Gasgenerators, obwohl der Gasgenerator bzw. das Gassackmodul mit einem eine günstige Schwingungsfrequenz aufweisenden elastischen Lagerelement vom Lenkrad schwingungsentkoppelt gelagert ist.

Erfindungsgemäß ist das elastische Lagerelement Teil einer Erdungsleitung, die vom Gasgenerator zum Lenkrad verläuft. Unter einer Erdungsleitung wird hier allgemein die elektrische Verbindung des Gasgenerators mit Masse verstanden, unabhängig davon, ob sich diese Erdungsleitung aus einem oder aus mehreren Bauteilen zusammensetzt. Entscheidend ist, daß eine Masseverbindung zum Gasgenerator geschaffen wird. Das elastische Lagerelement kann dabei zwischen verschiedenen Bauteilen angeordnet sein, so zum Beispiel zwischen dem Gasgenerator und einem Gassackmodulgehäuse, zwischen einem Modulgehäuse und dem Lenkrad oder auch zwischen einem Gassackträger und einem Zwischenblech, das mit dem Modulgehäuse verbunden ist. Wesentlich ist nur, daß diese Bauteile so miteinander verbunden sind, daß eine Erdungsleitung zum Gasgenerator entsteht.

Bevorzugt werden die Schwingungseigenschaften hauptsächlich durch ein elastomeres Element bestimmt, das Teil des elastischen Lagerelements ist. Für das elastomere Element lassen sich herkömmlich verwendete Materialien wie Elastomere oder Gummi einsetzen.

Weitere vorteilhafte Merkmale der Erfindung sind in den Unteransprüchen beschrieben.

Die Erfindung wird im folgenden anhand von Ausführungsbeispielen und mit Bezug auf die beigefügten Zeichnungen näher dargestellt. In den Zeichnungen zeigen:
- Figur 1 eine Schnittansicht eines Teils eines erfindungsgem äßen Gassackmoduls;
- Figur 2 eine Schnittansicht eines Abschnitts eines erfindungsgemäßen elastischen Lagerelements; und
- Figur 3 eine Schnittansicht eines erfindungsgemäßen Lenkr ads.

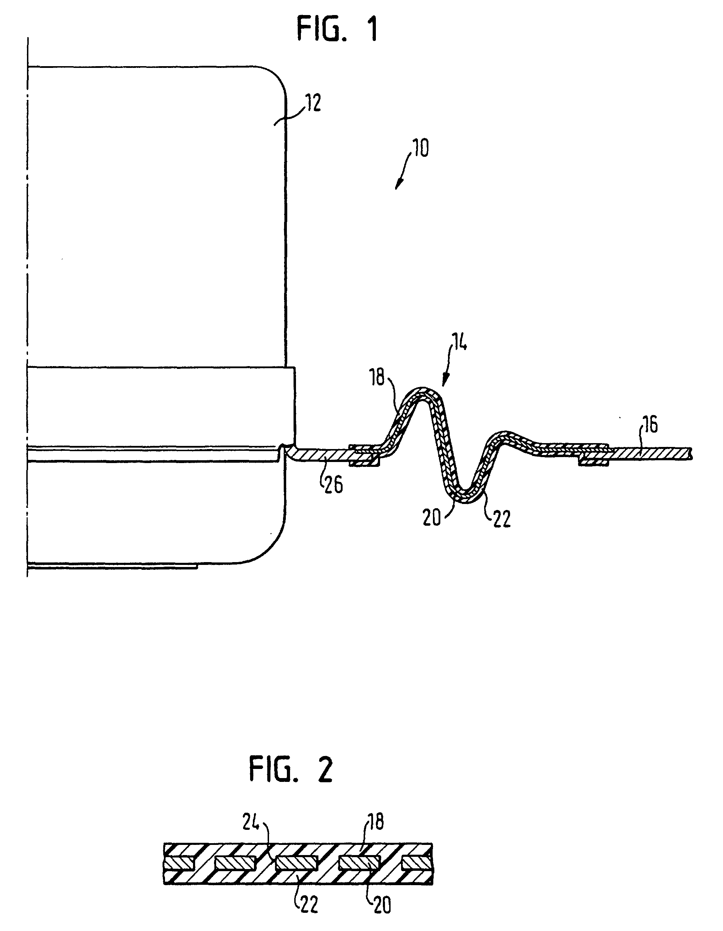

Figur 1 zeigt einen Teil eines erfindungsgemäßen Gassackmoduls 10 mit einem Gasgenerator 12, der über ein elastisches Lagerelement 14 gegenüber einem Modulgehäuse 16 schwingungsentkoppelt gelagert ist. Das elastische Lagerelement 14 bildet zumindest einen Teil einer Erdungsleitung des Gasgenerators 12 zu einer nicht gezeigten elektrischen Masse, z.B. einem Lenkrad, einer Lenkwelle oder einem anderen Fahrzeugteil. Der übrige Teil der Leitung wird durch metallische Gehäuseteile oder Befestigungsteile gebildet. Das elastische Lagerelement 14 weist drei Lagen 18, 20, 22 auf. Die außenliegenden Lagen 18, 22 bestehen aus einem elastischen, elektrisch isolierenden Material, vorzugsweise einem Elastomer und besonders bevorzugt aus Gummi, während die mittlere Lage 20 aus einem elektrisch leitfähigen Material besteht. Das elektrisch leitfähige Material können zum Beispiel Metalldrähte oder ein Metallgeflecht sein, aber auch eine Folie, die mit einer leitfähigen Beschichtung, z.B aus Messing, versehen ist. Die elektrisch leitfähige Lage 20 kann auch aus Aramid- oder Kohlefasern gebildet sein.

In der in Figur 2 dargestellten Ausführungsform weist die leitfähige Lage 20 Öffnungen 24 auf, durch die hindurch die beiden elastischen Lagen 18, 22 zum Beispiel durch Vulkanisieren miteinander verbunden sind.

Auch andere Ausführungsformen des elastischen Lagerelementes 14 sind denkbar. So kann zum Beispiel das Lagerelement 14 vollständig aus einem leitfähigen Elastomer bestehen, das zum Beispiel mit Metallpartikeln oder mit Rußteilchen versetzt ist, es kann aber auch eine der Lagen aus einem leitfähigen Elastomer beschaffen sein. Die leitfähige Lage muß nicht in der Mitte angeordnet sein.

Das elastische Lagerelement 14 ist so geformt und so angeordnet, daß der Gasgenerator 12 vom Modulgehäuse 16 schwingungsentkoppelt ist. Für diesen Zweck kann das elastische Lagerelement 14 z.B. die in Figur 1 gezeigte wellenförmige Gestalt aufweisen. Die Federkonstante des elastischen Lagerelementes 14 kann so gewählt sein, daß der Gasgenerator 12 als Schwingungstilger arbeiten kann.

Wichtig ist, daß das elastische Lagerelement 14 so mit dem Gasgenerator 12 und dem Modulgehäuse 16 verbunden ist, daß die leitfähige Lage 20 in Kontakt mit elektrisch leitfähigen Teilen des Modulgehäuses 16 bzw. des Gasgenerators 12 ist. Dies kann zum Beispiel wie in der hier gezeigten Ausführungsform dadurch erfolgen, daß die leitfähige Lage 20 in elektrischen Kontakt mit einem Flansch 26 des Gasgenerators 12 gebracht wird, oder aber durch elektrische Kontaktierung der leitfähigen Lage an einen leitfähig mit dem Gasgenerator verbundenen Generatorträger. Es können auch weitere Bauteile zwischen Gasgenerator 12 und Modulgehäuse 16 sozusagen dazwischengeschaltet sein, solange eine leitfähige Verbindung vom Gasgenerator 12 zum Modulgehäuse 16 über das elastische Lagerelement 14 gewahrt bleibt.

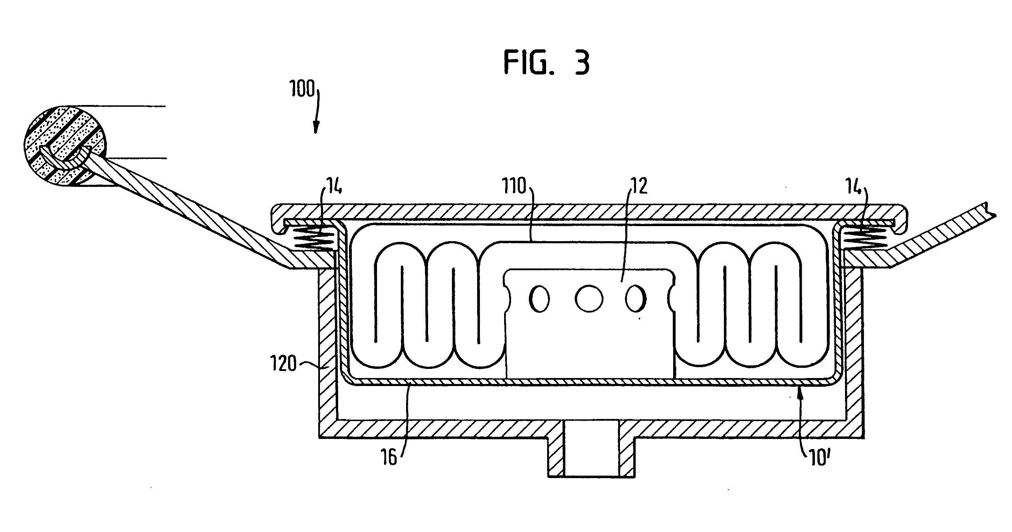

Figur 3 zeigt eine weitere Ausführungsform der Erfindung. In einem Lenkrad 100 ist ein Gassackmodul 10' über elastische Lagerelemente 14 schwingungsentkoppelt gelagert. Die elastischen Lagerelemente 14 sind in Figur 3 schematisch dargestellt, weisen aber bevorzugt eine Form und Ausführung auf, die der oben beschriebenen entsprechen. Die Federkonstante der elastischen Elemente 14 kann so gewählt sein, daß das Gassackmodul als Schwingungstilger eingesetzt werden kann.

Im Gassackmodul 10' sind ein Gasgenerator 12 sowie ein Gassack 110 angeordnet, wobei der Gasgenerator 12 fest und elektrisch leitend mit dem Modulgehäuse 16 verbunden ist. Die elastischen Lagerelemente 14 sind so angeordnet, daß sie Teil einer Erdungsleitung des Gasgenerators 12 bilden und bevorzugt so, daß eine elektrische Verbindung zwischen dem Modulgehäuse 16 und einem aus einem metallischen Werkstoff bestehenden Skelett 120 des Lenkrads 100 geschaffen ist.

## Patentansprüche

1. Gassackmodul mit einem Gasgenerator (12) und einem elastischen Lagerelement (14), mittels dem der Gasgenerator (12) schwingungsentkoppelt im Gassackmodul (10) gelagert ist, **dadurch gekennzeichnet, daß** das elastische Lagerelement (14) elektrisch leitfähig ist und zumindest einen Teil einer elektrischen Erdungsleitung für den Gasgenerator (12) bildet.

2. Gassackmodul nach Anspruch 1, **dadurch gekennzeichnet, daß** das elastische Lagerelement (14) ein elastomeres Element (18, 22) enthält.

3. Gassackmodul nach Anspruch 2, **dadurch gekennzeichnet, daß** das elastomere Element (18, 22) aus Gummi besteht.

4. Gassackmodul nach einem der Ansprüche 2 und 3, **dadurch gekennzeichnet, daß** das elastomere Element ein elektrisch leitfähiges Elastomer enthält.

5. Gassackmodul nach einem der vorhergehenden Ansprüche, **dadurch gekennzeichnet, daß** das elastische Lagerelement (14) mehrere Lagen (18, 20, 22) aufweist.

6. Gassackmodul nach Anspruch 5, **dadurch gekennzeichnet, daß** wenigstens eine der Lagen (20) aus einem elektrisch leitfähigen Material besteht.

7. Gassackmodul nach Anspruch 6, **dadurch gekennzeichnet, daß** die elektrisch leitfähige Lage (20) zwischen zwei Lagen (18, 22) aus elastischem Material angeordnet ist.

8. Gassackmodul nach einem der Ansprüche 6 und 7, **dadurch gekennzeichnet, daß** die leitfähige Lage (20) aus Metallgeflecht, Metalldraht, Metallfolie, einer mit einem elektrisch leitfähigen Material beschichteten Folie oder Kohlefaser besteht.

9. Gassackmodul nach einem der Ansprüche 6 bis 8, **dadurch gekennzeichnet, daß** die elektrisch leitfähige Lage (20) Öffnungen (24) aufweist.

10. Gassackmodul nach Anspruch 9, **dadurch gekennzeichnet, daß** die elastischen Lagen (18, 22) durch die Öffnungen (24) hindurch miteinander verbunden sind.

11. Lenkrad mit einem Gassackmodul, das einen Gasgenerator enthält, wobei das Gassackmodul (10') mittels eines elastischen Lagerelements (14) schwingungsentkoppelt am Lenkrad (100) gelagert ist, **dadurch gekennzeichnet, daß** das elastische Lagerelement (14) elektrisch leitfähig ist und einen Teil einer Erdungsleitung des Gasgenerators (12) bildet.

12. Lenkrad nach Anspruch 11 mit einem Gassackmodul nach einem der Ansprüche 2 bis 10.

## Claims

1. A gas bag module comprising a gas generator (12) and an elastic bearing element (14), by means of which the gas generator (12) is mounted in the gas bag module (10) so as to be neutralized with regard to vibrations, **characterized in that** the elastic bearing element (14) is electrically conductive and forms at least a part of an electrical earthing line for the gas generator (12).

2. The gas bag module according to Claim 1, **characterized in that** the elastic bearing element (14) contains an elastomeric element (18, 22).

3. The gas bag module according to Claim 2, **characterized in that** the elastomeric element (18, 22) consists of rubber.

4. The gas bag module according to any of Claims 2 and 3, **characterized in that** the elastomeric element contains an electrically conductive elastomer.

5. The gas bag module according to any of the preceding Claims, **characterized in that** the elastic bearing element (14) has several layers (18, 20, 22).

6. The gas bag module according to Claim 5, **characterized in that** at least one of the layers (20) consists of an electrically conductive material.

7. The gas bag module according to Claim 6, **characterized in that** the electrically conductive layer (20) is arranged between two layers (18, 22) of an elastic material.

8. The gas bag module according to any of Claims 6 and 7, **characterized in that** the conductive layer (20) consists of metal braid, metal wire, metal foil, a foil coated with an electrically conductive material, or carbon fiber.

9. The gas bag module according to any of Claims 6 to 8, **characterized in that** the electrically conductive layer (20) has openings (24).

10. The gas bag module according to Claim 9, **characterized in that** the elastic layers (18, 22) are connected with each other through the openings (24).

11. A steering wheel comprising a gas bag module which contains a gas generator, the gas bag module (10') being mounted on the steering wheel (100) so as to be neutralized with regard to vibrations by means of an elastic bearing element (14), **characterized in that** the elastic bearing element (14) is electrically conductive and forms a part of an earthing line of the gas generator (12).

12. The steering wheel according to Claim 11, comprising a gas bag module according to any of claims 2 to 10.

## Revendications

1. Module de coussin à gaz comprenant un générateur de gaz (12) et un élément de montage (14) élastique au moyen duquel le générateur de gaz (12) est monté découplé vis-à-vis des vibrations dans le module de coussin à gaz (10), **caractérisé en ce que** l'élément de montage (14) élastique est électroconducteur et forme au moins une partie d'une ligne de mise à terre pour le générateur de gaz (12).

2. Module de coussin à gaz selon la revendication 1, **caractérisé en ce que** l'élément de montage (14) élastique comprend un élément élastomère (18, 22).

3. Module de coussin à gaz selon la revendication 2, **caractérisé en ce que** l'élément élastomère (18, 22) est en caoutchouc.

4. Module de coussin à gaz selon l'une des revendications 2 et 3, **caractérisé en ce que** l'élément élastomère contient un élastomère électroconducteur,

5. Module de coussin à gaz selon l'une des revendications précédentes, **caractérisé en ce que** l'élément de montage (14) élastique présente plusieurs couches (18, 20, 22).

6. Module de coussin à gaz selon la revendication 5, **caractérisé en ce qu'**au moins une des couches (20) est en un matériau électroconducteur.

7. Module de coussin à gaz selon la revendication 6, **caractérisé en ce que** la couche électroconductrice (20) est agencée entre deux couches (18, 22) en matériau élastique.

8. Module de coussin à gaz selon l'une des revendications 6 et 7, **caractérisé en ce que** la couche (20) conductrice est constituée par un treillis métallique, un fil métallique, une feuille métallique, une feuille revêtue d'un matériau électroconducteur ou par une fibre de carbone.

9. Module de coussin à gaz selon l'une des revendications 6 à 8, **caractérisé en ce que** la couche (20) électroconductrice présente des ouvertures (24).

10. Module de coussin à gaz selon la revendication 9, **caractérisé en ce que** les couches (18, 22) élastiques sont reliées les unes aux autres à travers les ouvertures (24).

11. Volant comportant un module de coussin à gaz qui contient un générateur de gaz, le module de coussin à gaz (10') étant monté découplé vis-à-vis des vibrations sur le volant (100), **caractérisé en ce que** l'élément de montage (14) élastique est électroconducteur et forme une partie d'une ligne de mise à terre pour le générateur de gaz (12).

12. Volant selon la revendication 11, comportant un module de coussin à gaz selon l'une des revendications 2 à 10.
